# EUROPEAN PATENT APPLICATION

(11) **EP 1 566 981 A1**
(43) Date of publication of application: **24.08.2005**
(21) Application number: 04291406.9
(22) Date of filing: 04.06.2004
(51) Int. Cl.: H04Q 7/32

(54) **Method of facilitating downloading, storing and forwarding of ring tones and other services in a mobile terminal**

(30) Priority: 19.02.2004 EP 04290448
(71) Applicant: Axalto S.A., 92120 Montrouge (FR)
(72) Inventor: Sharma, Vineet, c/o Axalto SA, 92120 Montrouge (FR)

(57) **Abstract**

A method for downloading services to a first mobile terminal, wherein each service has a format corresponding to a type of a respective mobile terminal, and wherein said service is being stored in a first terminal irrespective of the format corresponding to the type of said first terminal, comprises a converting step to convert the service from a first format into a second format, and a sending step of effecting sending the from the first mobile terminal to a mobile terminal.

## Description

### BACKGROUND OF THE INVENTION

### Field of the Invention

The present invention generally relates to the field of mobile telecommunications, and especially to facilitating downloading, storing and forwarding of ring tones and other services in a mobile terminal.

### Background Art

Today, subscribers can download ring tones, from a content provider's or the operator's web site, to their mobile phone. For this the user has to log on to a web site, on which the ring tone content is available, select the desired ring tone, select the handset model being used, and indicate his or her mobile number. The web server is then able to send the ring tone via an Short Message Service (SMS) to the subscriber's mobile phone. Most handsets support different ring tone formats; therefore it is important to specify the model number, respectively type of the mobile phone, so that the web server can send the ring tone in the format appropriate for the mobile phone.

Alternatively, users can also download ring tones by sending a SMS to a given number. To account for the appropriate format, the user will have to send an SMS with a different text content and/or to a different number, depending on the model number, respectively type of the mobile phone, for downloading the ring tone in the format appropriate for the mobile phone.

Such a SMS containing a ring tone is different from normal text SMS, in that the SMS header coding is different, indicating to the handset upon arrival that special processing is required.

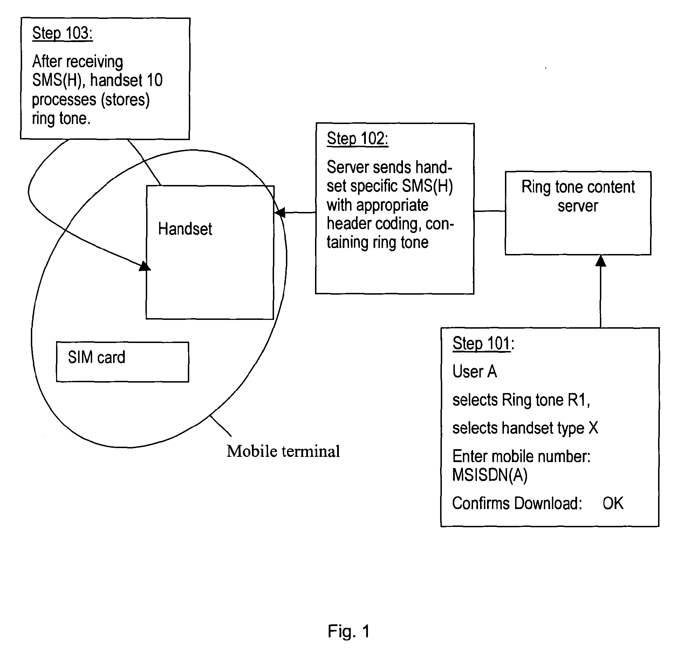

Fig. 1 shows a conventional example of downloading a ring tone service. In Fig. 1, a ring tone content server stores a plurality of ring tones. In a first step, the user accesses the server, selects the desired ring tone, specifies the type of handset of his mobile terminal, and enters his or her mobile phone number and confirms the download (Step 101). The server then constructs a ring tone in the format supported by the handset and sends a SMS(H), containing the ring tone to the phone number indicated. SMS(H) is different from normal text SMS in that its header coding is different, and upon arrival indicates special processing by the handset. (Step 102). Once the SMS(H) is received by the mobile terminal, the handset, according to the header coding, processes and stores the ring tone (Step 103).

As can be seen from this example, today, there is no mechanism of storing ring tones on the Subscriber Identity Module (SIM) card. Ring tones downloaded from a server are sent to and processed by the handset, and not to the SIM. This has the disadvantage that a user, when changing handsets, cannot transfer the ring tones to his new handset.

Handsets allow only storage of a limited number of ring tones downloaded from a server. As a result, the number of tones that users can add to their personal collection is limited by the handset in use.

Today, there also is no standard and/or protocol for a handset to read a ring tone from the SIM card. So even if one were to store ring tones on the SIM card, there is no apparent mechanism for the handset to read them.

Also, because different handsets support different ring tone formats, there is no mechanism to transfer ring tones from one handset to another handset of a different type supporting a different ring tone format.

Moreover, even for the case of handsets of the same type, there are no means available for subscribers to forward ring tones present on their mobile phone to other subscribers.

### SUMMARY OF THE INVENTION

It is therefore an object of the invention to provide a solution to the above mentioned disadvantages and problems. It is another object of the invention to simulate a ring tone server in a mobile terminal.

This is achieved by a method of storing and sending services in a mobile terminal as defined in claim 1 and a device for storing and sending services in a mobile terminal as defined in claim 9. Advantageous embodiments of the invention are defined in the dependent claims.

According to a first preferred embodiment of the invention, a method of storing and sending services in a first mobile terminal each service having a format corresponding to a type of a mobile terminal, said service being stored in a first mobile terminal irrespective of the format corresponding to the type of said first mobile terminal, comprises a converting step of converting said service from a first format into a second format, and a sending step of effecting sending said service to a mobile terminal.

Accordingly, this allows to simulate a "ring tone service content server" in the mobile terminal. A ring tone, being a preferred service, can be stored in the mobile terminal in any format, possibly different from the format supported by the handset of the mobile terminal. This ring tone can also be sent to another mobile terminal. For this, the ring tone is first converted into a format that will be understood by the handset the ring tone is sent to. It is also possible that a ring tone is being sent from a mobile terminal to itself. This allows to transfer a ring tone from the thus simulated "ring tone server" in the mobile terminal to the handset of the mobile terminal in such a way that the user then can enjoy the ring tone. Ring tones can be downloaded, and with that the storage of ring tones in the simulated ring tone server of mobile terminal be replenished, from a "real" ring tone content server to the "simulated ring tone server" in that the real ring tone server sends the service in a SMS with specific encoding that indicates that the content destined for the simulated ring tone server.

According to a further preferred embodiment, the first format corresponds to the format the service is stored in; and the second format corresponds to the format corresponding to a type of the mobile terminal the service is to be sent to in the sending step.

This allows to even better to simulate a ring tone server in that a service, e.g. a ring tone, which is stored in a first format is converted to the format that the mobile terminal the service should be sent to will understand. Thus, like a real ring tone server or server for service content, the simulated server can provide stored content in a plurality of formats corresponding to a plurality of types of handsets or mobile terminals..

In a further preferred embodiment, the converting step and the sending step are performed inside a tamper resistant device, such as a SIM card, being coupled to a handset of a mobile terminal.

Accordingly, the SIM application can simulate the behavior of the ring tone content server, with the user interface (UI) being provided by SIM Toolkit (STK) menus. Operations, like select tone, download tone, etc., are also provided via STK menus, such that the user is able to scroll, select and send, either to himself or to other users, any particular ring tone.

In another preferred embodiment, the service is a ring tone, a display logo, a picture, an audiovisual sequence or a game.

Although ring tones are used as an example, and also are very popular with users of mobile terminals, also other services, such as the ones mentioned above, can be distributed and used in the same way.

According to another preferred embodiment, in the sending step the converted service is sent in a short messaging service SMS(H) including header information indicating special processing by a handset of a mobile terminal.

The mobile terminal that receives such a message will not be able distinguish a short messaging service SMS or a multimedia messaging service MMS containing a ring tone originating from a conventional ring tone content server from a SMS of the same format containing a ring tone sent from a mobile terminal utilizing the method of the embodiment. Interoperability is thus ensured.

Another preferred embodiment comprises a receiving step of receiving a service sent in a SMS having a specific header encoding different from normal text SMS and SMS(H).

With this, a mobile terminal can download a service from a content server offering ring tones and/or other services in a way that the content, i.e., the service is not processed by the handset of the mobile terminal, but instead is handed over to the simulated server, preferably a SIM application. This allows to download a service to a device, preferably a SIM card.

According to another preferred embodiment, a method further comprises an inputting step of receiving commands inputted by a user, and an organization step of organizing the stored services according to the commands received in the inputting step.

In this way, preferably using STK menus, a user can name ring tone and other services, group them in categories, or even delete them, thus freeing memory for new services.

A method according to yet another preferred embodiment further comprises a group management step of defining and managing group information, the group information containing a plurality of mobile phone numbers belonging to mobile terminals (, and respective formats, and a group sending step of sending the converted service from the first terminal to all the mobile terminals comprised in the group.

This allows a user to create a group of friends, an put all relevant information into this group. The user would for example enter the names, mobile phone numbers, and also maker and/or type of the handset and/or format supported for downloading services in the group. After this information has once been created, the user can now with simple operation forward a ring tone, or the "screen logo of the day" to all his friends.

In another preferred embodiment, a device for storing and sending services in a first mobile terminal, each service having a format corresponding to a respective mobile terminal type, comprises storage means for storing the service, the service being stored irrespective of the format corresponding to the type of the first terminal; converting means for converting the service from a first format into a second format; and sending means for effecting sending the service from the first mobile terminal to a mobile terminal.

With this, it is provided a device that can "simulate a ring tone server" in a mobile terminal.

According to another preferred embodiment, the first format corresponds to the format the service is stored in; and the second format corresponds to the format corresponding to a type of the mobile terminal the service is to be sent by the sending means.

In a further preferred embodiment, converting and sending means are comprised inside a tamper resistant device, such as a SIM card being coupled to a handset of a terminal.

According to another preferred embodiment, the service is a ring tone, a display logo, a display picture, an audiovisual sequence or a game.

Preferably, the converted service is sent in a SMS(H) comprising header information indicating special processing by a handset.

In another preferred embodiment, a mobile terminal comprise a device of storing and sending services in a mobile terminal as of the second embodiment.

### BRIEF DESCRIPTION OF THE DRAWINGS

The foregoing and other objects, aspects and advantages of the invention will be better understood from the following detailed description of a preferred embodiment of the invention with reference to the drawings, in which:
- Fig. 1: shows a conventional method of downloading ring tones to a handset;
- Fig. 2: shows a method of downloading ring tones to a mobile terminal according to a preferred embodiment of the invention;
- Fig. 3a: shows a method of processing and forwarding ring tones in a mobile terminal according to a preferred embodiment of the invention; and
- Fig. 3b: shows initial processing after exchange of handset according to a preferred embodiment of the invention.

### DETAILED DESCRIPTION OF A PREFERRED EMBODIMENT OF THE INVENTION

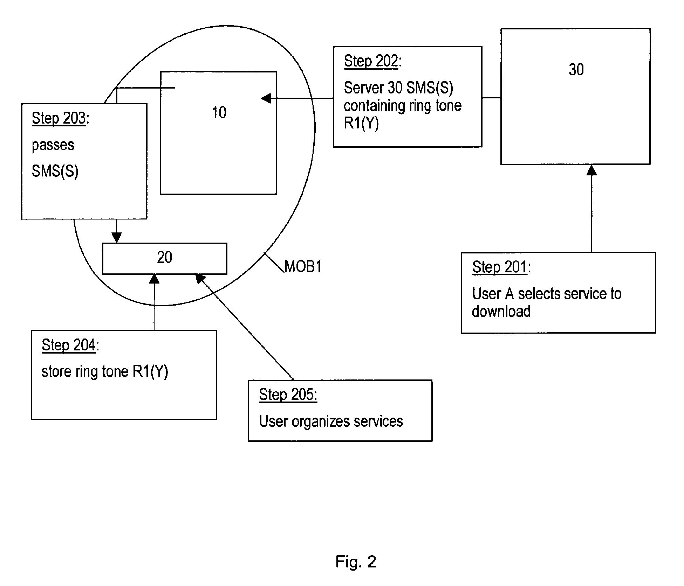

With reference to Fig. 2, description will be made of downloading ring tones to a SIM card 20 of a mobile terminal MOB1, MOB2. Fig. 2 shows a ring tone content server 30, and a mobile terminal MOB 1 of user A, having mobile phone number MSISDN(A) (Mobile Subscriber Integrated Services Digital Network number of user A), and comprising a handset 10 and a SIM card 20.

In Fig. 2, the content server 30 offers the option of downloading to SIM card 20. When user A accesses the server 30 and selects this option, and also selects the desired ring tone R1 and his or her mobile number MSISDN(A) (Step 201), the server 30 constructs a ring tone R1 in some default format Y supported by some default handset type Y, as R1(Y). The choice of the default ring tone format is left to the operator, and could correspond to X, Y, Z or any other handset 10. Thereafter, the server sends R1(Y) in a SMS(S) to the mobile number MSISDN(A). A SMS(S) differs from normal text SMS and SMS(H) in that its header coding indicates that it is destined for a SIM application (Step202). When the SMS(H) is received by the mobile terminal MOB1, the handset 10 does not process the SMS(S), but sends it to the SIM application (Step 203). Once SMS(S) is received on the SIM card 20, the SIM application stores the received ring tone R1(Y) in an appropriate memory location, for example in an application file F (Step 204). STK menus that are part of the SIM application allow access to this ring tone storage to let the user name, categorize and sort ring tones (Step 205).

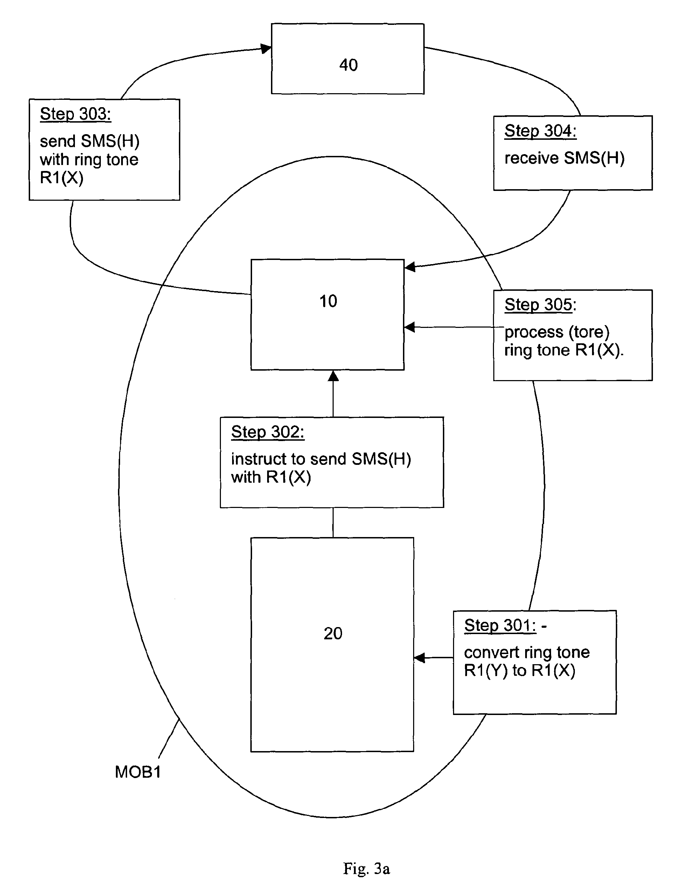

Referring now to Fig. 3a, description will be made how a ring tone is converted and transferred to a handset 10.

Fig. 3a shows a mobile terminal MOB1, of a user A, with mobile number MSISDN(A). The mobile terminal comprises a handset 10, and a SIM card 20. When the user selects a particular ring tone, for example R1, which is stored in the SIM in the default format R1(Y), the SIM application first converts the ring tone R1 to the format corresponding to the handset 10 in current use, X, resulting in a converted ring tone R1(X) (Step 301).

Then, using SIMToolkit commands the SIM application instructs the handset 10 to send a SMS(H) containing the converted ring tone R1(X) to the mobile number of the user MSISDN(A), that is, to itself (Step 302). As instructed, the handset 10 will then send the SMS(H) containing ring tone R1(X) to the mobile number MSISDN(A) (Step 303). Once the handset 10 receives this SMS(H), with specific header coding (Step 304), it is able to process R1(X) for use by the subscriber as a new ring tone. (Step 305).

Similarly, the user A is also able to send the service R1 not only to himself or herself, but also to another person B, respectively his or her mobile phone MOB2. To do so, the user first has to specify the mobile number of said person MSISDN(B), and the format supported by the handset, Z. In this case then, in step 301, the ring tone R1(Y) is converted to format Z, resulting in a converted ring tone R1(Z). Thereupon, in step 302, the SIM application instructs the handset 10 to send a SMS(H) containing ring tone R1(Z) to the mobile number of person B, MSISDN(B). As instructed, the handset 10 will then send the SMS(H) containing ring tone R1(Z) to MSISDN(B) (Step 303). Once the handset 10 receives this SMS(H) (Step 304), it is able to process R1(Z) for use by the other person B as a new ring tone (Step 305).

Typically, sending the SMS(H) will result in it being transferred over a mobile communication network 40 the mobile terminal MOB1, MOB2 is communicating with. However, it is also possible that the handset 10 of a mobile terminal MOB1, MOB2 recognizes a SMS(H) that it is instructed to send to itself, and internally processes the steps of sending and receiving the SMS(H) such that there is no need for transferring the SMS(H) over the mobile communication network 40, and thus avoiding communication costs.

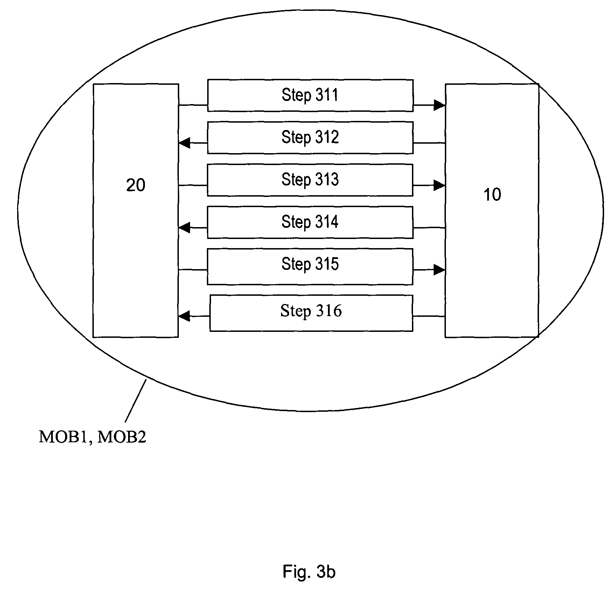

As described in the above, using STK menus that are part of the SIM application, the user is able to select and use and/or forward any of the stored ring tones R1(Y), R2(Y), etc. Before this, however, a few initial steps need to be performed. Referring now to Fig. 3b, on the very first power-on of the handset 10, the SIM application requests the handset's identity IMEI (International Mobile Equipment Identity) (Step 311), and receives the IMEI (Step 312). This IMEI is then stored as original IMEI in the SIM card. The user is also prompted (Step 313) to enter his mobile number, MSISDN(A) (Step 314). Finally, the SIM application also prompts the user (Step 315), for example via STK menus, to indicate the handset type, X, being used, either by scrolling and/or selecting from a pre-defined list, or by manually entering the handset type via the keypad (Step 316).

This also allows for portability and re-usability of ring tones in case of a handset change. On every power-on, the SIM application polls the IMEI of the current handset 10, and compares it to the stored original IMEI. If the 2 values are different, the SIM application interprets this to imply a change in handset 10. Referring now to Fig. 3b, it then takes the user through the same routine of confirming his current handset type and indicating his mobile number as described previously. The new value of IMEI is then stored as original IMEI, in order to detect any further handset changes at subsequent power-on actions. Then, steps corresponding to steps 301 to 305 of Fig. 3a are performed. With the new handset in use, supporting format Z, when the user selects a particular tone, say R1, which is stored in the SIM in the default format R1(Y), the SIM application first converts R1(Y) to format R1(Z), that is, the format corresponding to the handset 10 in current use (Step 301). Then, using SIMToolkit commands, the SIM application instructs the handset 10 to send a SMS(H) containing ring tone R1(Z) to MSISDN(A), that is, to itself (Step 302). Accordingly, SMS(H) is sent (Step 303). Once handset 10 receives SMS(H) (Step 304), with specific header coding, it is able to process R1(Z) for use by the subscriber (Step 305).

Needless to say, if the new handset 10 is of type Y, then the SIM application would not need convert the ring tone R1(Y), as it is already stored in the format supported by handset type Y.

Forwarding of a ring tone R1 to a plurality of other users B, C, D, ..., can be facilitated by using the concept of "Groups". Herein, the user can define a group of "Friends" and within this group, he can add respective contact details of friends, preferably by using STK menus, such as for example name, mobile number MSISDN(B, C, D, ...) and handset type X, Y, Z. Now, when the forward option is chosen, the SIM application will automatically refer to the respective details of the group, MSISDN(B, C, D .....) and handset type X, Y, Z, and send respective messages SMS(H) with ring tones R1(X), R1(Y), R1(Z) to MSISDN(B, C, D, ...).

It is also possible for the SIM card to receive, store and process services such as ring tones R1, R2, not only in one format Y, but also in a plurality of formats X, Y, Z. This allows for different content servers 30 to choose different formats as default formats, independent of the choice of default formats made for other content servers 30.

All of the steps 301, 302, and 311 to 315 described in the above can be perfromed in a tamperproof device such as a SIM card that is coupled to a handset of a first mobile terminal MOB1.

## Claims

1. A method of storing and sending services (R1, R2) in a first mobile terminal (MOB1),
each service (R1, R2) having a format (X, Y, Z) corresponding to a type of a mobile terminal (MOB1, MOB2);
said service (R1, R2) being stored in a first mobile terminal (MOB1) irrespective of the format (X, Y, Z) corresponding to the type of said first mobile terminal (MOB1);
said method comprising the steps of
converting said service (R1, R2) from a first format (X, Y, Z) into a second format (X, Y, Z) and
sending said service (R1, R2) to a mobile terminal (MOB1, MOB2).

2. The method according to claim 1, wherein
said first format (X, Y, Z) corresponds to the format said service (R1, R2) is stored in; and
said second format (X, Y, Z) corresponds to the format corresponding to a type of said mobile terminal (MOB1, MOB2) said service (R1, R2) is to be sent to in said sending step.

3. The method according to claims 1 or 2, wherein said converting step and said sending step are performed inside a tamper resistant device, such as a SIM card (20), being coupled to a handset (10) of a mobile terminal (MOB1, MOB2).

4. The method according to one of the preceding claims, wherein said service (R1, R2) is a ring tone, a display logo, a picture, an audiovisual sequence or a game.

5. The method according to one of the preceding claims, wherein said service (R1, R2) is sent in a SMS(H) comprising header information indicating special processing by a handset (10) of a mobile terminal (MOB1, MOB2).

6. The method according to one of the preceding claims, further comprising a step of receiving a service (R1, R2) sent in a SMS(S).

7. The method according to one of the preceding claims, further comprising an inputting step of receiving commands inputted by a user, and
an organization step of organizing said stored services (R1, R2) according to the commands received in said inputting step.

8. The method according to one of the preceding claims, further comprising
a group management step of defining and managing group information, said group information containing a plurality of mobile phone numbers (MSISDN(B, C, D)) belonging to mobile terminals (MOB1, MOB2, MOB3), and information corresponding to respective formats (X, Y, Z), and
a group sending step of sending said service (R1, R2) from said first terminal (MOB1) to all said mobile terminals (MOB1, MOB2, MOB3) comprised in said group.

9. A device (100) for storing and sending services (R1, R2) in a first mobile terminal (MOB 1),
each service (R1, R2) having a format (X, Y) corresponding to a respective mobile terminal type (MOB1, MOB2),
said device comprising
storage means for storing said service (R1, R2), said service being stored irrespective of the format (X, Y, Z) corresponding to the type of said first terminal (MOB1);
converting means for converting said service (R1, R2) from a first format (X, Y, Z) into a second format (X, Y, Z); and
sending means for effecting sending said service (R1, R2) from said first mobile terminal (MOB 1) to a mobile terminal (MOB1, MOB2).

10. The device (100) according to claim 9, wherein
said first format (X, Y, Z) corresponds to the format said service (R1, R2) is stored in; and
said second format (X, Y, Z) corresponds to the format corresponding to a type of said mobile terminal (MOB1, MOB2) said service (R1, R2) is to be sent by said sending means.

11. The device (100) according to claims 9 or 10, **characterized in that** said device (100) is a SIM card (20) being coupled to a handset (10) of a terminal (MOB1, MOB2).

12. The device according to one of claims 9 to 11, wherein said service is a ring tone, a display logo, a display picture, an audiovisual sequence or a game.

13. The device according to one of claims 9 to 12, wherein said converted service (R1, R2) is sent in a SMS(H) comprising header information indicating special processing by a handset (10).
